# EUROPÄISCHE PATENTSCHRIFT

(11) **EP 1 890 911 B1**
(45) Veröffentlichungstag und Bekanntmachung des Hinweises auf die Patenterteilung: **14.07.2010**
(21) Anmeldenummer: 06753514.6
(22) Anmeldetag: 08.05.2006
(51) Int. Cl.: B60R 1/076

(54) **AUSSENRÜCKBLICKSPIEGEL FÜR FAHRZEUGE, VORZUGSWEISE FÜR KRAFTFAHRZEUGE**
OUTER REAR-VIEW MIRROR FOR VEHICLES, PREFERABLY MOTOR VEHICLES
RETROVISEUR EXTERIEUR POUR VEHICULES, DE PREFERENCE POUR VEHICULES AUTOMOBILES

(30) Priorität: 11.05.2005 DE 102005021757
(43) Veröffentlichungstag der Anmeldung: 27.02.2008
(73) Patentinhaber: SMR Patents S.à.r.l., 1653 Luxembourg (LU)
(72) Erfinder: OEHMANN, Roland, 70188 Stuttgart (DE); SONNTAG, Kürsat, 86498 Kettershausen (DE)
(74) Vertreter: Rausch, Gabriele
(86) Internationale Anmeldenummer: PCT/EP2006/004283
(87) Internationale Veröffentlichungsnummer: WO 2006/119948

(56) Entgegenhaltungen:
- GB-A- 2 049 797
- US-A- 4 732 461
- PATENT ABSTRACTS OF JAPAN Bd. 010, Nr. 242 (M-509), 21. August 1986 (1986-08-21) & JP 61 071244 A (ICHIKOH IND LTD), 12. April 1986 (1986-04-12)
- PATENT ABSTRACTS OF JAPAN Bd. 010, Nr. 077 (M-464), 26. März 1986 (1986-03-26) & JP 60 219137 A (ICHIKO KOGYO KK), 1. November 1985 (1985-11-01)

## Beschreibung

Die Erfindung betrifft einen Außenrückblickspiegel für Fahrzeuge, vorzugsweise für Kraftfahrzeuge, nach dem Oberbegriff des Anspruches 1.

Es sind Außenrückblickspiegel im Automotivebereich bekannt, bei denen ein Spiegelkopf und ein Spiegelfuß über eine Anlenkung beiderseits gelenkig miteinander verbunden sind. Mittels einer solchen Anlenkung ist es möglich, daß der Spiegelkopf aus einer normalen Betriebsstellung in oder entgegen der Fahrtrichtung geschwenkt werden kann. Weiter ist bekannt, daß der entgegengesetzt zur Fahrtrichtung geschwenkte Spiegelkopf in dieser geschwenkten Position sicher zu arretieren sein muß. Die Betätigung hierzu kann sowohl von Hand als auch mittels eines Motors erfolgen. Die Außenrückblickspiegel sollen sicher in der geschwenkten Position gehalten werden können, während für den Schwenkvorgang möglichst eine reibungsfreie und leichtgängige Betätigung erwünscht ist.

Derartige Spiegel verwenden bezüglich der Anlenkung oft ein Zwischengelenk, das einerseits schwenkbar mit dem Spiegelfuß, andererseits schwenkbar mit dem Spiegelkopf verbunden ist. Diese Zwischengelenke sind aus Gründen der Stabilität meistens aus Metall (komplexe Gußteilkonstruktionen) gefertigt und haben aufwendige Lagerausführungen, Anschläge und/oder Rast- und Feststellmechanismen. Sie benötigen einen ihren Abmessungen entsprechenden Einbauraum und sind durch die metallene Ausführung verhältnismäßig schwer und kostenintensiv in der Herstellung. Die Anforderung eines dicht an das Fahrzeug geschwenkten und feststellbaren Spiegels ist für die Parkposition von Fahrzeugen in eng begrenzten Parklücken oder bei der Durchfahrt enger Tore von großer Bedeutung. Ebenfalls wird bei parkenden Fahrzeugen die Verletzungsgefahr für Passanten durch den angeklappten Außenrückblickspiegeln erheblich verringert.

Ein Spiegel mit den Merkmalen des Oberbegriffs des Anspruchs 1 ist aus der JP-A-6207 1244 bekannt.

Der Erfindung liegt die Aufgabe zugrunde, den gattungsgemäßen Außenrückblickspiegel so auszubilden, daß er in oder entgegen der Fahrtrichtung geschwenkt werden kann und dabei mit geringem Kraftaufwand in einer sicheren Parkpositionierung gehalten wird und wieder in die normale Betriebsstellung zurückgeschwenkt werden kann, wobei er besonders kompakt und kostengünstig herzustellen ist und dabei allen gesetzlichen Anforderungen genügt.

Diese Aufgabe wird bei dem gattungsgemäßen Außenrückblickspiegel erfindungsgemäß mit den kennzeichnenden Merkmalen des Anspruches 1 gelöst.

Beim erfindungsgemäßen Außenrückblickspiegel hat das Zwischengelenk die beiden parallel zueinander liegenden Gelenkachsen, die die Schwenkachsen eines vorderen und hinteren Gelenks bilden. Das in Fahrtrichtung hintere Gelenk ist schwenkbar im Spiegelfuß, das vordere Gelenk im Spiegelkopf gelagert. Beide Schenkel werden vorteilhaft über einen Steg miteinander verbunden, der in seiner Formgebung der Innenkontur des Spiegelfußes und des Spiegelkopfes folgt. Eine der Gelenkachsen, vorzugsweise die hintere Gelenkachse ist mit einem U-förmigen Ansatz als Druck- und Gleitstück für eine Parkraste versehen. Die Parkraste dient zur festen Fixierung des Spiegelkopfs in normaler Betriebsstellung sowie in entgegengesetzt zur Fahrtrichtung geschwenkten Position/Parkposition. In der normalen Betriebsstellung wirkt die Parkraste als verriegelndes Element und sichert den Spiegelkopf vor einem unkontrollierten Schwenken oder Schwingen, wobei die Parkraste den Spiegelkopf unter ständiger Vorspannung auf den Spiegelfuß drückt. Beim Schwenkvorgang in die Parkposition des Außenrückblickspiegels wird die Parkraste über den U-förmigen Ansatz aus dieser verriegelnden Position geschwenkt und gleitet entlang einer Nockenform der Parkraste bis zu einem Anschlag, welcher der Parkposition des Außenrückblickspiegels entspricht.

Der U-förmige Ansatz verringert die Reibung zwischen der Parkraste und dem Träger des Spiegelkopfs dadurch, daß bei den unter Belastung stehenden, berührenden Kunststoffbauteilen (Träger, Parkraste) der U-förmige Ansatz die Kunststoffbauteile nur an zwei Stellen linienförmig berührt. Zur weiteren Verringerung der Reibung kann der U-förmige Ansatz mit einem leicht gleitenden Überzug versehen sein. Weiter hat der U-förmige Ansatz die Aufgabe, die zwischen der Parkraste und dem Träger wirkende Kraft zu übertragen und auf die Gelenkachsen zu verteilen. Durch diese Aufteilung der wirkenden Kräfte auf mehrere Bauteile und Abschnitte wird eine Beschädigung bzw. ein Versagen nach häufigem Schwenken sicher vermieden.

Die Verwendung eines zusätzlichen vorteilhaft als Drahtbügel ausgebildeten Sicherungselementes bewirkt der Verhinderung einer Überstreckung des Spiegelkopfes bei einer Schwenkbewegung in Fahrtrichtung nach vorn dar. Hierbei ist ein zusätzlicher, z. B. U-förmiger Drahtbügel in der hinteren Gelenkaufnahme zusammen mit dem erfindungsgemäß als Zwischengelenk wirkenden Drahtbügel schwenkbar eingebaut. Mit seinem anderen Ende gleitet dieser zusätzliche Drahtbügel in einem Langloch des Trägers und begrenzt durch seine Gleitmöglichkeit entlang des Langlochs den Schwenkbereich des Spiegelkopfes in Fahrtrichtung. Dieser zusätzliche Drahtbügel kann im inneren Bereich des das Zwischengelenk bildenden Drahtbügels angeordnet sein.

Beide Drahtbügel sind einfache Biegeteile aus einem vorzugsweise nicht korrodierenden Metall und lassen sich einfach und sehr kostengünstig herstellen. Das geringe Gewicht und die günstige Verteilung der wirkenden Kräfte erlauben im Spiegelkopf wie auch am Spiegelfuß einfache und weniger stark dimensionierte Ausführungen von Verstrebungen und/oder Lagerstellen.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: einen Querschnitt durch einen Außenrückblickspiegel in entgegen- gesetzt zur Fahrtrichtung abgeklappten Zustand,
- Fig. 2: eine Lagerstütze mit Drahtbügel
- Fig. 3: einen Schnitt durch den Außenrückblickspiegel in Parkrastenebene in normaler Betriebsstellung,
- Fig. 3a: eine Draufsicht auf den Drahtbügel,
- Fig. 3b: eine perspektivische Darstellung zu Fig. 3,
- Fig. 4: einen Schnitt durch den in Fahrtrichtung abgeklappten Außenrück- blickspiegel in Parkrastenebene,
- Fig. 4a: eine perspektivische Darstellung zu Fig. 4,
- Fig. 5: einen Schnitt durch den entgegengesetzt zur Fahrtrichtung abge- klappten Außenrückblickspiegel in Parkrastenebene,
- Fig. 5a: eine perspektivische Darstellung zu Fig. 5,
- Fig. 6: einen Querschnitt durch den in Fahrtrichtung abgeklappten Außen- rückblickspiegel und einer in Fahrtrichtung wirkenden Schwenkbe- grenzung,
- Fig. 7: einen Querschnitt durch einen Außenrückblickspiegel in normaler Betriebsstellung und ruhender Schwenkbegrenzung.

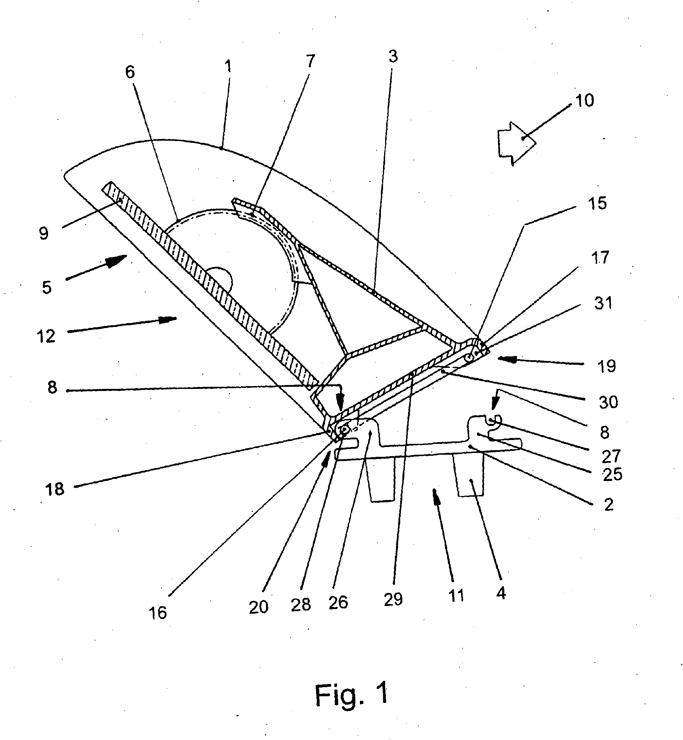

In Fig. 1 ist ein Querschnitt durch einen Außenrückblickspiegel 5 im entgegengesetzt zur Fahrtrichtung 10 geklappten Zustand dargestellt. Der Außenrückblickspiegel 5 besteht im wesentlichen aus einem Spiegelkopf 12 und einem Spiegelfuß 11, der an einem Fahrzeug in bekannter Weise befestigt wird. Am Spiegelfuß 11 ist der Spiegelkopf 12 in Fahrtrichtung 10 nach vorne oder hinten abklappbar gelagert.

Der Spiegelkopf 12 hat ein, Gehäuse 1 in dem ein Spiegelglasträger 9 angeordnet ist. Er kann über einen Verstellantrieb 6 und ein Getriebe 7 in horizontaler und/oder vertikaler Richtung geschwenkt werden. Der Verstellantrieb 6 ist im rückwärtigen Bereich des Spiegels 5 durch gängige Befestigungsmittel, wie Schrauben, Clipse usw. befestigt. Das Getriebe 7 ist fest mit einem Träger 3 des Spiegelkopfes 12 verbunden.

An der dem Spiegelfuß 11 zugewandten Seite des Spiegelkopfes 12 ist ein Aufnahmeraum 31 für einen Draht- oder Gelenkbügel 30 vorgesehen. Der Aufnahmeraum 31 wird im wesentlichen durch eine in Fahrtrichtung 10 vorn liegende vordere Gehäusewand 17, eine hintere Gehäusewand 18 und einen die Gehäusewände verbindenden Boden 29 begrenzt: Benachbart zu den beiden Gehäusewänden 17, 18 ist ein vorderes Lager 19 und ein hinteres Lager 20 angeordnet. Das vordere Lager 19 hat ein vorderes Gelenk 15, das über einen Steckabschnitt 8 und eine vordere Gelenkaufnahme 27 in eine vordere Lagerstütze 25 eingreifen kann. In gleicher Weise wird das hintere Lager 20 gebildet. Hier wird ein hinteres Gelenk 16 über den Steckabschnitt 8 und eine hintere Gelenkaufnahme 28 einer hinteren Lagerstütze 26 zusammengefügt.

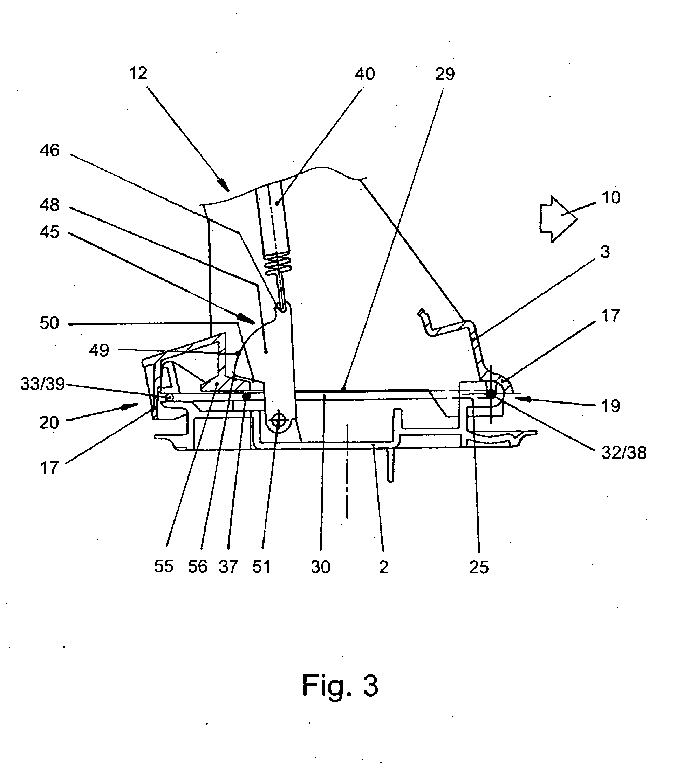

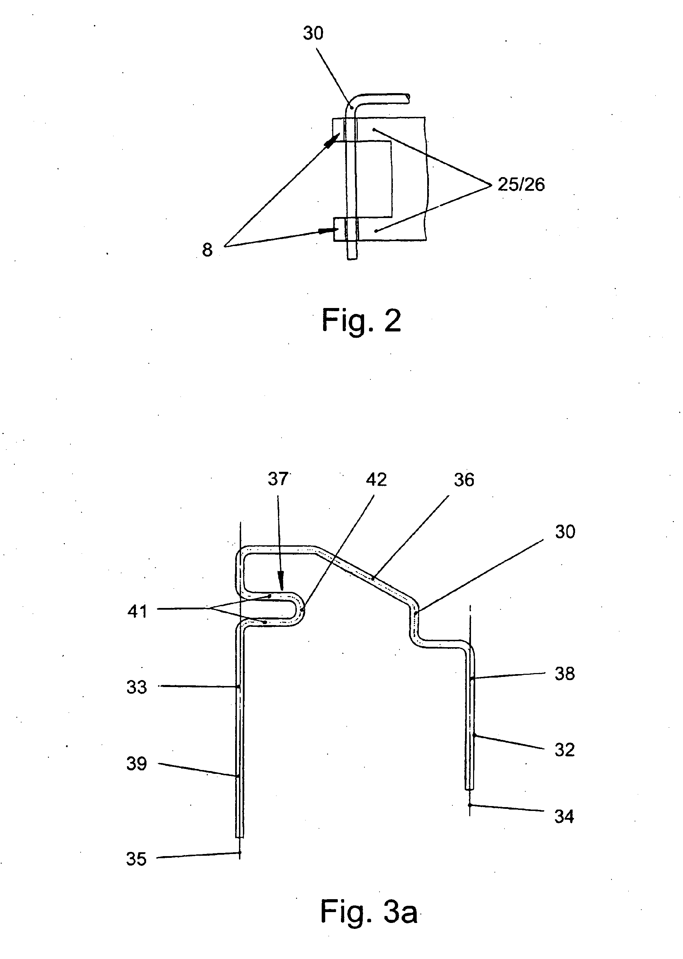

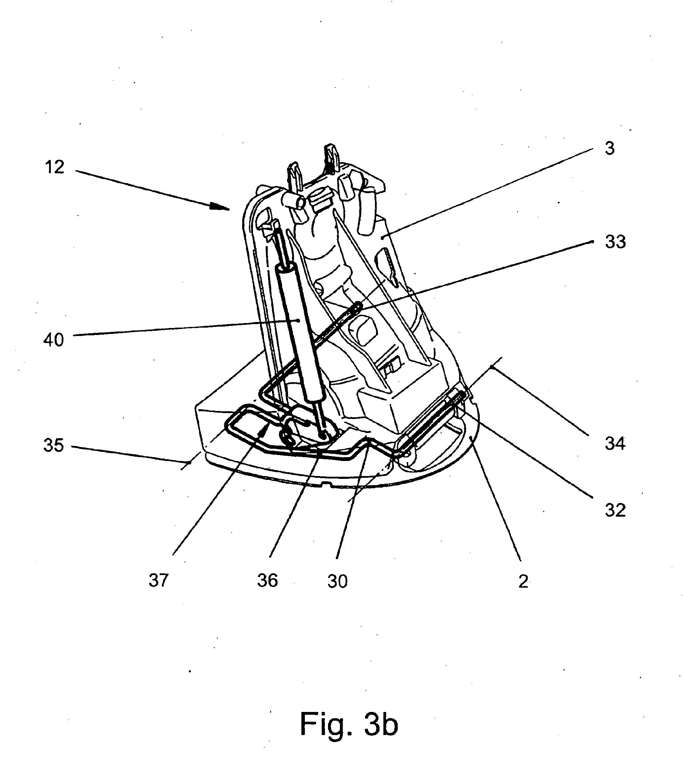

Bei beiden Gelenken 15, 16 greift ein Teilabschnitt des Drahtbügels 30 über die Steckabschnitte 8 in eine den Drahtbügel 30 aufnehmende Aussparung der Lagerstützen 25, 26 ein. Die hierbei im Eingriff befindlichen Teilabschnitte des Drahtbügels 30 bilden je nach Abklapprichtung des Spiegelkopfes 12 eine vordere bzw. hintere Gelenk-/Schwenkachse 38, 39 (Fig. 3), um die der Spiegelkopf 12 gegenüber dem Spiegelfuß 11 entsprechend geschwenkt werden kann.

In der Stellung des Spiegelkopfes 12 gemäß Fig. 1 befinden sich die Elemente des in Fahrtrichtung 10 hinteren Lagers 20 im Eingriff, wobei sich das hintere Gelenk 16 in der hinteren Gelenkaufnahme 28 befindet. Schwenkt nun der Spiegelkopf 12 um dieses Gelenk 16, wird ein Abheben des Spiegelkopfes 12 aus dem hinteren Lager 20 dadurch verhindert, daß die hintere Gehäusewand 18 des Spiegelkopfes 12 die hintere Gelenkaufnahme 28 umgreift. Dieser Umgriffsbereich wird mit zunehmendem Schwenkwinkel des Spiegelkopfes 12 größer.

Die hintere Gelenkaufnahme 28 ist Teil der hinteren Lagerstütze 26, die ihrerseits als L-förmiges Bauteil einstückig mit dem Spiegelfuß 11 ausgebildet ist. Schwenkt der Spiegelkopf 12 entgegen Fahrtrichtung 10 nach hinten, wird das hintere Gelenk 16 in die hintere Gelenkaufnahme 28 gedrückt. Allein durch diese Art der Bewegung ist ein sicheres Abklappen/Schwenken des Spiegelkopfes 12 gewährleistet.

Beide Lagerstützen 25, 26 sind einstückig mit einer Konsole 2 des Spiegelfußes 11 ausgebildet, von der sie senkrecht abstehen. Auf der den Lagerstützen 25, 26 gegenüberliegenden Seite der Konsole 2 sind am Spiegelfuß 11 Ansätze 4 vorgesehen. Sie sind in ihrer Geometrie so gestaltet, daß sie in korrespondierende Ausnehmungen an der Fahrzeugtür oder an einem anderen fahrzeugfesten Bauteil hineinragen und befestigt werden können. Den im Aufnahmeraum 31 liegenden Gelenken 15, 16 ist jeweils die eine Gelenkachse 38, 39 zugeordnet, die jeweils durch ein Drahtbügelsegment bzw. einen Drahtabschnitt 32, 33 gebildet werden (Fig. 3a). Die Abschnitte 32, 33 sind durch einen Steg 36 miteinander verbunden. Die parallel zueinander verlaufenden, geraden Abschnitte 32, 33, die vertikal zum Außenrückblickspiegel 5 liegen, und der Steg 36 sind einstückig miteinander ausgebildet.

Klappt der Spiegelkopf 12 wie abgebildet (Fig. 1) entgegengesetzt der Fahrtrichtung 10, wird die Schwenkachse durch die hintere Gelenkachse 39 des Drahtbügels 30 gebildet. Der Drahtbügel 30 verbleibt bei einem derartigen Klappen des Spiegelkopfes 12 mit seinem nicht im Eingriff befindlichen Bereich während des gesamten Schwenkvorgangs in der Ausnehmung 31 des Spiegelkopfes 12. Der Drahtbügel 30 schwenkt also in gleicher Weise und in gleicher Richtung wie der Spiegelkopf 12. Bei einem Abklappen in Fahrtrichtung 10 des Spiegelkopfes 12 verhält sich der Drahtbügel 30 in entgegengesetzter Weise und verbleibt im wesentlichen parallel zur Konsole 2, in beiden Lagerstützen 25, 26 liegend positioniert.

Wie bereits erwähnt, sind die Lagerstützen 25, 26 einstückige, L-förmige an der Konsole 2 angeformte Bauteile. Der freie Schenkel der vorderen Lagerstütze 25 zeigt in Fahrtrichtung 10 nach vorn, während der freie Schenkel der hinteren Lagerstütze 26 entgegen der Fahrtrichtung 10 ausgerichtet ist. Um ein sicheres Schwenken um die jeweilige Gelenkachse 38, 39 zu ermöglichen, greift das jeweilige Drahtbügelsegment 38, 39 des Drahtbügels 30 in wenigstens zwei L-förmige, mit Abstand hintereinander liegende Lagerstützen 25, 26 je Schwenkachse und Seite (Fig. 2) ein. Selbstverständlich können auch mehrere derartige L-förmige Lagerstützen 25, 26 je Schwenkachse und Seite vorgesehen sein. Kommen mehrere L-förmige Lagerstützen 25, 26 beim hinteren oder vorderen Lager 20, 19 zum Einsatz, verteilen sich die Abstützkräfte auf die Anzahl der entsprechenden L-förmigen Lagerstützen 25, 26. Die Konstruktion wird hierdurch stabiler und hält größeren Belastungen stand.

In Fig. 3 ist ein Schnitt durch den Außenrückblickspiegel 5 in Parkrastenebene und in normaler Betriebsstellung abgebildet. In diesem Schnitt sind wesentliche Bauteile und konstruktive Ausgestaltungen abgebildet, die in Fig. 1 nicht dargestellt wurden.

In Betriebsstellung oder in dem in Fahrtrichtung 10 nach hinten abgeklappten Zustand muß der Spiegelkopf 12 in diesen Positionen sicher fixierbar sein. Diese Fixierung ist notwendig, damit ein unkontrolliertes Schwenken oder ein Schwingen des Spiegelkopfes 12 verhindert wird. Eine derartige gesicherte Position wird durch den Einsatz eines fixierenden Bauteils, der Parkraste 45, erreicht.

In normaler Betriebsstellung des Außenrückblickspiegels 5 sind das hintere Lager 20 und das vordere Lager 19 gleichzeitig im Eingriff. Hierbei befindet sich der Boden 29 des Aufnahmeraumes 31 im wesentlichen in paralleler Ausrichtung zur Konsole 2, die ihrerseits wiederum im wesentlichen parallel zu dem entsprechenden Aufnahmebereich des Fahrzeuges ausgerichtet ist. Damit ein Abheben beider oder eines der Lager 19, 20 verhindert wird, wird der Spiegelkopf 12 mit allen seinen Bauteilen durch wenigstens eine Zugfeder 40 in die Lagerstützen 25, 26 gezogen. Hierbei befinden sich die geraden Drahtbügelsegmente 32, 33 der vorderen und hinteren Gelenkachse 38, 39 in Eingriff mit den Lagerstützen 25, 26 und übertragen die Anpreßkraft, die durch die Zugfeder 40 wirkt.

Die Zugfeder 40 ist in einer Federöse 46 der Parkraste 45 eingehängt. Die Parkraste 45 dient als Zwischenelement zwischen der Zugfeder 40 und der Konsole 2 und ist mit ihrem schlanken Ende über eine Schwenkachse 51 an der Konsole 2 gelagert ist. Die Parkraste 45 weist an ihrer in Fahrtrichtung 10 rückwärtigen Seite einen nockenförmigen Ansatz 48 auf, der auf der der Schwenkachse 51 zugewandten Seite gerade und auf der der Feder 40 zugewandten Seite gekrümmt ausgebildet ist. Die gerade Seite des Nockens 48 ist als Anschlag 50 der Parkraste 45 ausgelegt. In normaler Betriebsstellung des Außenspiegels 5 liegt der Anschlag 50 der Parkraste 45 an einer korrespondierenden Fläche 56 der Konsole 2 an.

In dieser normalen Betriebsstellung ist die Zugfeder 40, in Draufsicht gemäß Fig. 3 gesehen, in Fahrtrichtung 10 leicht nach hinten geneigt. Durch diese Neigung der Feder 40 wird in normaler Betriebsstellung die Parkraste 45 mit ihrem Anschlag 50 permanent auf den Anschlag 56 der Konsole 2 gedrückt. Dieser Anschlag 50, 56 steht somit immer unter Vorspannung, so daß im Betrieb eine feste Fixierung zwischen dem Spiegelfuß 11 und dem Spiegelkopf 12 gewährleistet ist. Ein Schwingen oder Klappen des Spiegelkopfes 12 wird somit zuverlässig verhindert. In dieser Stellung befindet sich der Drahtbügel 30 mit seinem vorderen Drahtabschnitt 32 in Eingriff dem vorderen Lager 19 und mit seinem hinteren Drahtabschnitt 33 in Eingriff mit dem hinteren Lager 20. Beide in Eingriff befindlichen Drahtabschnitte 32, 33 sind in dieser Position der normalen Betriebsstellung deckungsgleich mit den beiden Schwenkachsen 34 und 35 und liegen mit diesen in derselben Ebene (siehe Fig. 3 b).

Figur 3 a zeigt eine ebene Ansicht des Drahtbügels 30. Die vordere Schwenkachse 38 des Drahtbügels 30 wird durch den vorderen Drahtabschnitt 32 gebildet. Er liegt im wesentlichen parallel zum hinteren Drahtabschnitt 33, der die hintere Gelenkachse 39 bildet. Der Abstand zwischen beiden Drahtabschnitten 32 und 33 entspricht dem Abstand der vorderen Lagerstütze 25 zur hinteren Lagerstütze 26. Beide Drahtabschnitte 32, 33 sind über den Steg 36 des Drahtbügels 30 miteinander verbunden. Die weitere Formgebung des Stegs 36 entspricht den geometrischen Ausgestaltungen und Gegebenheiten des Aufnahmeraums 31 sowie möglichen geometrischen Ausformungen der Konsole 2. Auf der Seite der hinteren Gelenkachse 39 ist der hintere Drahtabschnitt 33 nahe des Steges 36 mit einer U-förmigen Ausbiegung 37 ausgestattet. Sie hat zwei zueinander parallele Schenkel 41, die sich senkrecht zum Drahtabschnitt 33 in Richtung auf den Drahtabschnitt 32 erstrecken und durch einen vorteilhaft gekrümmten Steg 42 miteinander verbunden sind.

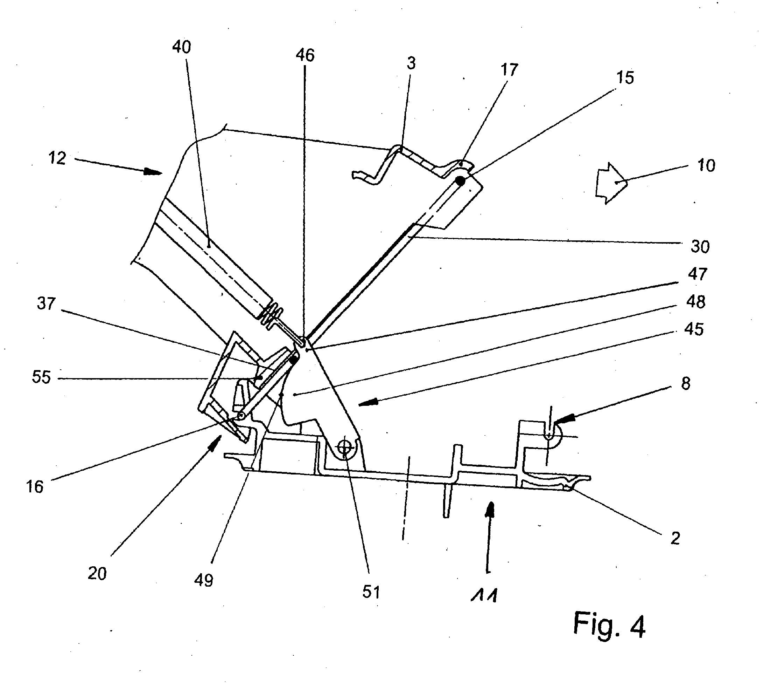

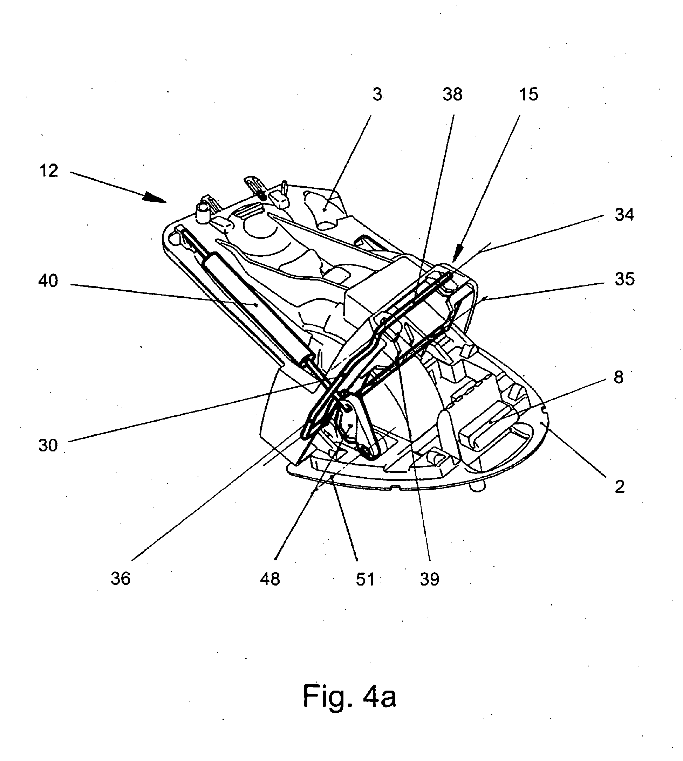

Bei einem Schwenken des Spiegelkopfes 12 entgegen der Fahrtrichtung 10 gleitet die U-förmige Ausbiegung 37 des Drahtbügels 30 entlang einer gekrümmten Gleitfläche 49 des Nockens 48, die an dem in Fahrtrichtung 10 rückwärtigen Rand der Parkraste 45 vorgesehen ist. Durch dieses Gleiten der U-förmigen Ausbiegung 37 auf der Gleitfläche 49 wird ein leichtes reibungsreduziertes Schwenken des Spiegelkopfes 12 ermöglicht. Zusätzlich kann die Gleitfläche 49 des Nockens 48, sowie auch der Steg 42 zur weiteren Reduzierung mit einer reibungsreduzierenden Beschichtung überzogen sein. Da der Nocken 48 mit seiner Gleitfläche 49 ebenso wie der Gegenanschlag 56 der Konsole 2 vorzugsweise aus Kunststoff gefertigt sind und bei Belastung eine elastische Verformung erfahren, wird durch das Gleiten der metallenen U-förmigen Ausbiegung 37 auf der Gleitfläche 49 diese Verformung sowie eine mechanische Beschädigung weitgehend verhindert. Am Ende dieser Schwenkbewegung kommt die U-förmige Ausbiegung 37 des Drahtbügels 30 mit einem ösenartigen Ansatz 47 des Nockens 48 in Kontakt (Fig. 4). Dieser Kontakt entspricht der Funktion eines Endanschlags. Der Ansatz 47 weist die Federöse 46 auf und ist an der von der Konsole 2 abgewandten Seite des Nockens 48 vorgesehen.

Im abgeklappten Zustand ist die Parkraste 45 um die Achse 51 entgegen Fahrtrichtung 10 so weit nach hinten geschwenkt, daß sie eine Schräglage einnimmt (Fig. 4). Die Neigung der Parkraste 48 zur Feder 40 bewirkt ein ständiges Anpressen der U-förmigen Ausbiegung 37 an einer Auflage 55 des Spiegelkopfes 12. Er wird somit in dieser verschwenkten Position unter Vorspannung klapper- und schwingungsfrei festgehalten. Bedingt durch die beinahe in Strecklage liegende Parkraste 45 und Feder 40 ist ein Lösen aus der geschwenkten, quasi verriegelten Position nur schwer möglich. Beim Zurückschwenken des Spiegelkopfes 12 in die Betriebsstellung ist die verminderte Reibung zwischen der U-förmigen Ausbiegung 37 und der Parkraste 45 vorteilhaft.

Schwenkt der Spiegelkopf 12 in seine normale Betriebsstellung zurück, wird die U-förmige Ausbiegung 37 durch die Auflage 55 des Spiegelkopfes 12 in Richtung auf die Parkraste 45 gedrückt. Bei diesem Bewegungsablauf stützt sich die auf die U-förmigen Ausbiegung 37 wirkende Kraft über die hintere Gelenkachse 39 des hinteren Gelenks 16 über die hintere Lagerstütze 26 in der Konsole 2 ab. Ebenso wird diese auf die U-förmige Ausbiegung 37 wirkende Kraft über den Steg 36 in den Bereich des vorderen Gelenkes 15 übertragen. Der gesamte Drahtbügel 30 wird somit zur Kräfteübertragung herangezogen und wirkt daher als zusätzliches verstärkendes Bauteil. Demzufolge können Wandungsabschnitte, Stützen, Streben und dergleichen im Spiegelkopf 12 schwächer ausgeführt werden, was eine entsprechende Materialeinsparung und somit Reduzierung des Gewichtes und der Kosten zur Folge hat.

Die beim Zurückschwenken über den Spiegelkopf 12 in die U-förmige Ausbiegung 37 eingebrachte Kraft versucht die über die Parkraste 45 abgestützte U-förmige Ausbiegung 37 relativ zur hinteren Gelenkachse 39 zu verwinden. Diese Torsion wird dadurch verhindert, daß der hintere Drahtabschnitt 33 der hinteren Gelenkachse 39 über den Steg 36 mit dem vorderen Drahtabschnitt 32 der vorderen Gelenkachse 38 verbunden ist. Der Torsion wird somit über den Steg 36 und den vorderen Drahtabschnitt 32 entgegengewirkt.

Der vordere Drahtabschnitt 32 ist in dem vorderen Gelenk 15 des Spiegelkopfes 12 befestigt. Hierdurch verbleibt der Drahtbügel 30 bei einem Schwenken entgegen der Fahrtrichtung 10 stets in dieser zum Spiegelkopf 12 gleichbleibenden Position angeordnet. Die U-förmige Ausbiegung 37 wird bei einer Rückwärtsbewegung des Spiegelkopfes 12 über die Gleitfläche 49 des Nockens 48 in ihre Ausgangsposition zurückgeführt. Die Parkraste 45 bewegt sich wieder mit ihrem Anschlag 50 auf den Gegenanschlag 56 der Konsole 2 zurück und verriegelt dadurch wieder den Spiegelkopf 12 mit der Konsole 2 in einer fest fixierten Position.

In der perspektivischen Darstellung der Figur 4 a ist deutlich die Positionierung des Drahtbügels 30 mit der vorderen und hinteren Gelenkachse 38, 39 sowie der U-förmigen Ausbiegung 37 zwischen dem Spiegelkopf 12 und dem Nocken 48 der Parkraste 45 zu erkennen. In dieser Darstellung ist gut zu erkennen, wie der Drahtbügel 30 entsprechend dem Aufnahmeraum 31 des Spiegelkopfes 12 mitschwenkt. Die vordere Schwenkachse 34 ist hierbei im vorderen Gelenk 15 des Trägers 3 gehalten.

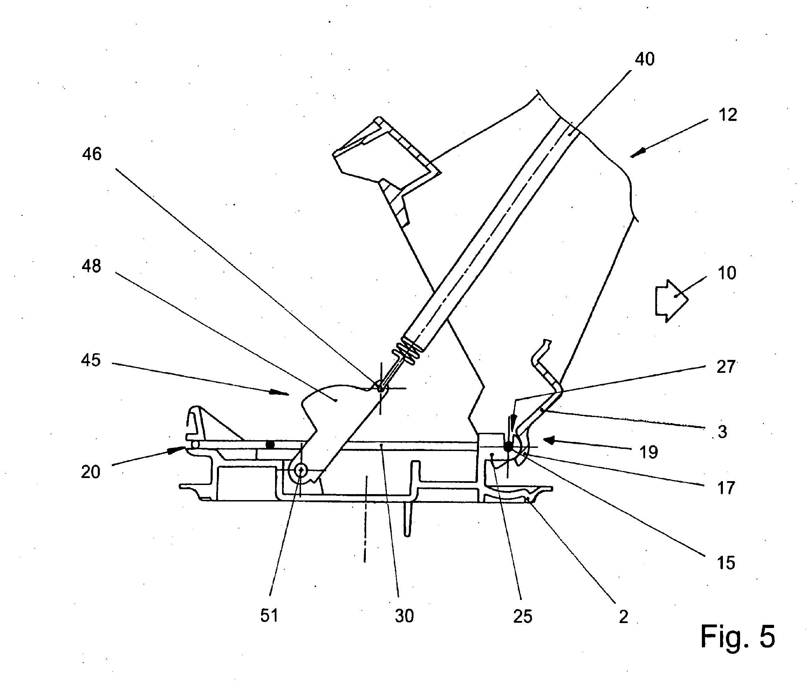

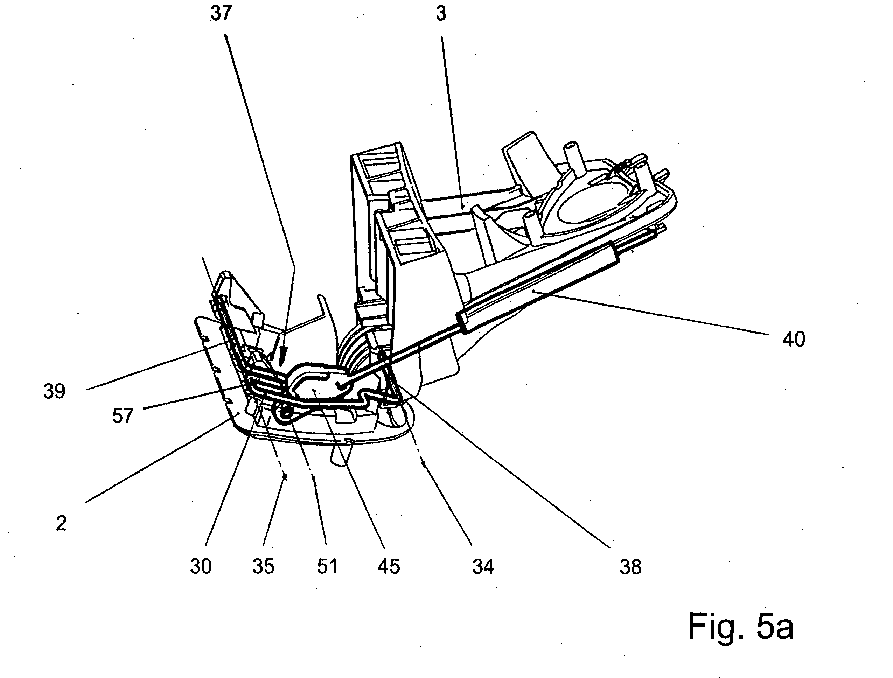

In Fig. 5 ist der Spiegelkopf 12 in Fahrtrichtung 10 nach vorn geschwenkt. Hierbei befindet sich das vordere Lager 19 des Spiegelkopfes 12 in Eingriff mit der vorderen Lagerstütze 25. Auch bei dieser Schwenkbewegung wird durch die vordere umgreifende Gehäusewand 17 ein Lösen des vorderen Lagers 19 verhindert. Entgegen dem anhand von Fig. 4 beschriebenen Schwenken des Spiegelkopfes 12 in Fahrtrichtung 10 nach hinten verbleibt in diesem Fall der Drahtbügel 30 in einer nicht geschwenkten Lage, in der sich der Drahtbügel 30 im wesentlichen parallel zur Konsole 2 befindet. Das hintere Lager 20 ist in diesem Fall kräftefrei.

In der verschwenkten Lage gemäß Fig. 5 befinden sich die Feder 40 und die Parkraste 45 in beinahe gestreckter Lage zueinander. Kein Bereich des Nockens 48 ist hierbei mit dem Drahtbügel 30 oder einem anderen Teil des Trägers 2 oder des Spiegelkopfes 12 in Kontakt. Dies ist auch nicht notwendig, da bei einem Schwenken in Fahrtrichtung 10 nach vorn eine Arretierung (Feststellung) des Spiegels 5 nicht gewünscht ist. Sollte der Spiegel 5 beispielsweise durch ein vorbeifahrendes Fahrzeug in Fahrtrichtung abgeklappt werden, ist ein sofortiges Rückstellen des Spiegels 5 in die normale Gebrauchsposition gewünscht.

Der Spiegelkopf 12 kann aus seiner Gebrauchslage gemäß Fig. 3 problemlos in Fahrtrichtung 10 nach vorn klappen, wenn auf ihn eine entsprechende Kraft ausgeübt wird. Er schwenkt in der beschriebenen Weise um die Achse 38. Über die Zugfeder 40 wird die Parkraste 45 um die Achse 51 in gleicher Richtung geschwenkt. Die Parkraste 48 hebt dabei mit ihrem Anschlag 50 vorn Gegenanschlag 56 ab.

Durch das sofortige Lösen der Parkraste 45 aus ihrer verriegelten Position und dem Schwenken der Parkraste 45 um die Schwenkachse 51 in Fahrtrichtung 10 nach vorn ist es möglich, daß der Spiegel 5 sehr schnell und sehr leicht in Fahrtrichtung 10 nach vorn bewegt werden kann. Die Lageanordnung des Drahtbügels 30 sowie die angenäherte Strecklage der Feder 40 und der Parkraste 45 sind in der perspektivischen Darstellung der Fig. 5 a zu erkennen. Ebenso ist dieser Darstellung die nicht in Eingriff befindliche Parkraste 45 mit der U-förmigen Ausbiegung 37 zu entnehmen.

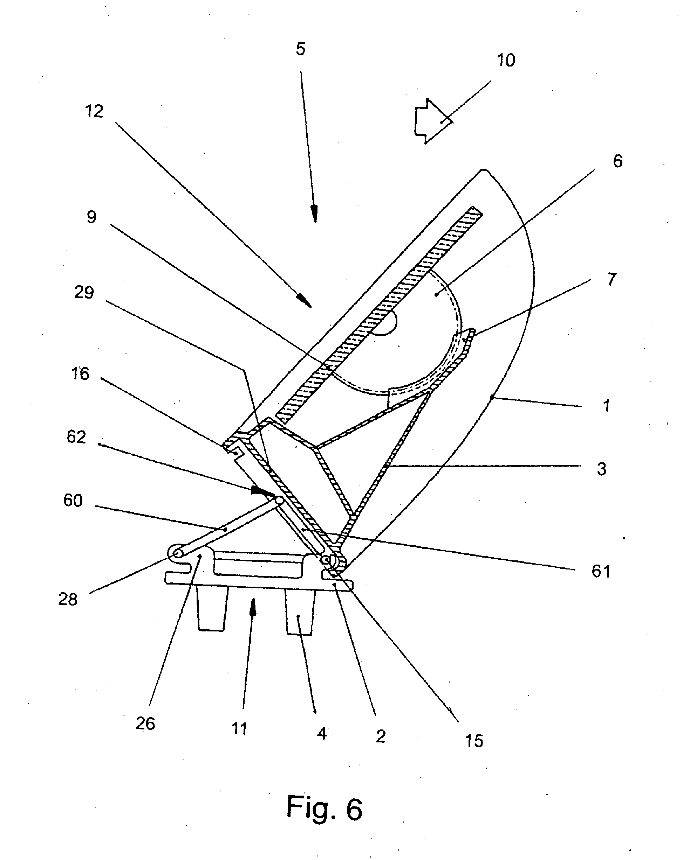

Als eine zusätzliche Variante zur Sicherung des Spiegelkopfes 12 ist in Fig. 6 ein Bügel 60 als Schwenkbegrenzung eingebaut. Dieser Bügel 60 ist beispielsweise U-fömig gebogen und mit einem Ende in der hinteren Gelenkaufnahme 28 schwenkbar angeordnet. Das gegenüberliegende Ende des Bügels 60 wird in einem Langloch 61 im Aufnahmeraum 31 des Trägers 3 aufgenommen. Wird der Spiegelkopf 12 in Fahrtrichtung 10 nach vorn geschwenkt, gleitet das dem Spiegelkopf 12 zugewandte Ende des Bügels 60 entsprechend der Ausdehnung des Langloches 61 bis zu dem dem hinteren Gelenk 16 zugewandten Ende 62 des Langloches 61. Der Bügel 60 nimmt hierbei eine durch das Langloch 61 begrenzte Strecklage ein und wirkt somit als Zugelement zwischen dem Spiegelkopf 12 und dem Spiegelfuß 11. Durch diese Schwenkbegrenzung des Bügels 60 wird eine Beschädigung des Lagers 19 insbesondere der vorderen Lagerstütze 25 und der vorderen Gehäusewand 17 durch einen zu großen Schwenkwinkel verhindert.

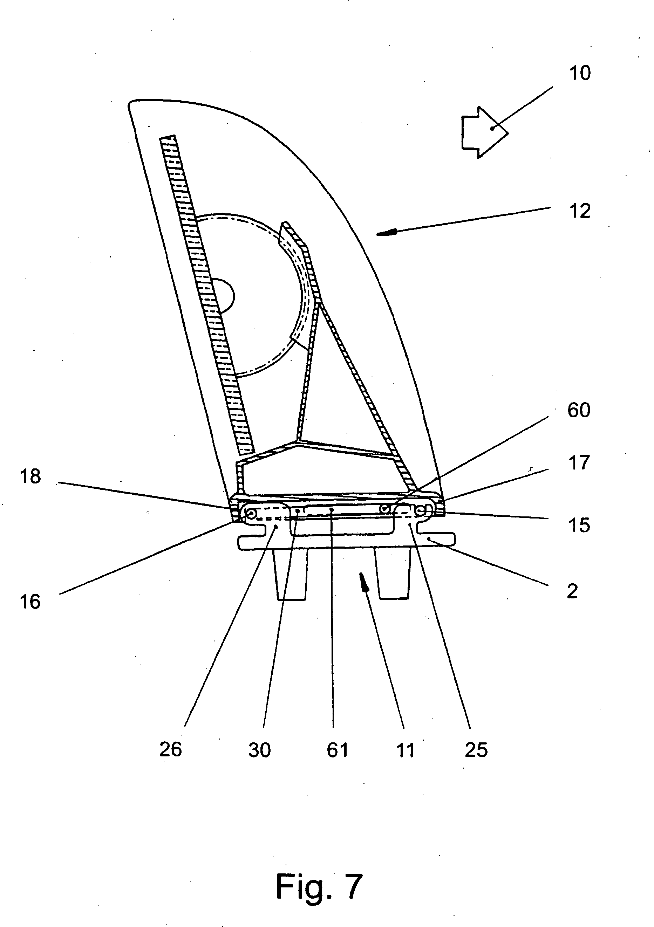

Die Ausdehnung des Langloches 61 ist so gewählt, daß der Bügel 60 nicht in eine blockierende Strecklage zwischen seiner konsolenseitigen Aufnahme und dem Spiegelkopf 12 gelangen kann. Dies ist notwendig, damit eine sofortige Rückstellung des Spiegelkopfes 12 bei einem Verschwenken in Fahrtrichtung 10 möglich ist. Somit wird durch die Ausdehnung und Positionierung des Langloches 61 eine Verriegelung des Spiegelkopfes 12 im in Fahrtrichtung 10 nach vorn geklappten Zustand verhindert. Klappt der Spiegelkopf 12 wieder in seine normale Betriebslage zurück, gleitet das dem Spiegelkopf 12 zugewandte Ende des Bügels 60 im Langloch 61, bis sich der Bügel 60 und das Langloch 61 in der Ebene der normalen Betriebsstellung in Deckung befinden. Das Langloch 61 und der Bügel 60 befinden sich dann gemeinsam im Aufnahmeraum 31 (siehe Fig. 7). Selbstverständlich kann das dem Spiegelfuß 11 zugewandte Ende des Bügels 60 auch an einer anderen Stelle der hinteren Lagerstütze 26 oder der Konsole 2 schwenkbar gelagert sein. Ebenso kann auch mehr als ein Bügel 60 zur Schwenkwinkelbegrenzung verwendet werden.

## Patentansprüche

1. Außenrückblickspiegel für Fahrzeuge, vorzugsweise für Kraftfahrzeuge, mit einem Spiegelfuß (11) und einem Spiegelkopf (12), der gegenüber dem Spiegelfuß (11) in oder entgegen der Fahrtrichtung (10) schwenkbar ist und einen in einem Gehäuse (1) befindlichen Träger (3) aufweist, der mit einer Konsole (2) des Spiegelfußes (11) über ein Zwischengelenk verbunden ist, das zwei zueinander parallele Gelenkachsen (38, 39) aufweist,
**dadurch gekennzeichnet, dass** das Zwischengelenk einen Drahtbügel (30) aufweist, der mit wenigstens einem U-förmigen Ansatz (37) versehen ist und von dem Drahtabschnitte (32, 33) die Gelenkachsen (38, 39) bilden.

2. Außenrückblickspiegel nach Anspruch 1,
**dadurch gekennzeichnet, dass** die Drahtabschnitte (32, 33) gerade ausgebildet sind.

3. Außenrückblickspiegel nach Anspruch 1 oder 2,
**dadurch gekennzeichnet, dass** die Drahtabschnitte (32, 33) die Endabschnitte des Drahtbügels (30) bilden.

4. Außenrückblickspiegel nach einem der Ansprüche 1 bis 3,
**dadurch gekennzeichnet, dass** die Drahtabschnitte (32, 33) über einen Steg (36) miteinander verbunden sind.

5. Außenrückblickspiegel nach Anspruch 4,
**dadurch gekennzeichnet, dass** der Steg (36) in seiner Formgebung den Innenkonturen des Spiegelkopf (12) und des Spiegelfußes (11) angepasst ist.

6. Außenrückblickspiegel nach einem der Ansprüche 1 bis 5,
**dadurch gekennzeichnet, dass** der U-förmige Ansatz (37) Teil eines der Drahtabschnitte (32, 33) ist.

7. Außenrückblickspiegel nach einem der Ansprüche 1 bis 6,
**dadurch gekennzeichnet, dass** die Schenkel (41) des U-förmigen Ansatz (37) orthogonal zu einer Gelenkachse (38, 39) ausgerichtet sind.

8. Außenrückblickspiegel nach einem der Ansprüche 1 bis 7,
**dadurch gekennzeichnet, dass** ein weiterer Steg (42) des U-förmigen Ansatz (37) welcher der beiden Schenkel (41) mit einander verbindet, parallel zur Gelenkachse (38, 39) verläuft.

9. Außenrückblickspiegel nach einem der Ansprüche 1 bis 8,
**dadurch gekennzeichnet, dass** der weitere Steg (42) des U-förmigen Ansatz (37) Gleitkörper und/oder Anschlag für eine Parkraste (45) ist.

10. Außenrückblickspiegel nach einem der Ansprüche 1 bis 9,
**dadurch gekennzeichnet, dass** der weitere Steg (42) des U-förmigen Ansatz (37) mit einer reibungsreduzierenden Beschichtung überzogen ist.

11. Außenrückblickspiegel nach einem der Ansprüche 1 bis 10,
**dadurch gekennzeichnet, dass** sich de water Steg (42) des U-förmigen Ansatzes (37) bei in Parkposition befindlichem, entgegen Fahrtrichtung (10) zurückgeklapptem Spiegelkopf (12) in geklemmter Lage zwischen einer Auflage (55) für den Drahtbügel (30) und einer vorzugsweise gekrümmten Gleitfläche (49) der Parkraste (45) befindet.

12. Außenrückblickspiegel nach einem der Ansprüche 1 bis 11,
**dadurch gekennzeichnet, dass** der Drahtbügel (30) in normaler Betriebsstellung des Spiegelkopfs (12) und bei entgegen der Fahrtrichtung (10) geschwenktem Spiegelkopf (12) innerhalb eines Aufnahmeraums (31) liegt, der im Spiegelkopf (12) an der dem Spiegelfuß (11) zugewandten Seite vorgesehen ist.

13. Außenrückblickspiegel nach einem der Ansprüche 1 bis 12,
**dadurch gekennzeichnet, dass** der Drahtbügel (30) bei in Fahrtrichtung (10) geschwenktem Spiegelkopf (12) sich mit den Gelenkachsen (38, 39) und Gelenkaufnahmen (27, 28) in Eingriff mit Lagerstützen (25, 26) des Spiegelfußes (11) befindet.

14. Außenrückblickspiegel nach einem der Ansprüche 1 bis 13,
**dadurch gekennzeichnet, dass** der Drahtbügel (30) in normaler Betriebsstellung und bei in Fahrtrichtung (10) geschwenktem Spielgelkopf (12) im wesentlichen parallel zur Konsole (2) des Spiegelfußes (11) positioniert ist.

15. Außenrückblickspiegel nach einem der Ansprüche 9 bis 14,
**dadurch gekennzeichnet, dass** bei entgegen der Fahrtrichtung (10) geschwenktem Spiegelkopf (12) die auf den Spiegelkopf (12) wirkende Haltekraft zwischen der Parkraste (45) und der Auflage (55) für den Drahtbügel (30) ausschließlich über den Quersteg (42) übertragen wird.

16. Außenrückblickspiegel nach einem der Ansprüche 13 bis 15,
**dadurch gekennzeichnet, dass** die Lagerstützen (25, 26) in normaler Betriebsstellung des Spiegelkopfes (12) vollständig in den Aufnahmeraum (31) ragen.

17. Außenrückblickspiegel nach einem der Ansprüche 13 bis 16,
**dadurch gekennzeichnet, dass** der Drahtbügel (30) mit seinen Gelenkachsen (38, 39) über jeweils einen Steckabschnitt (8) in die Lagerstützen (25, 26) eingreift.

18. Außenrückblickspiegel nach einem der Ansprüche 13 bis 17,
**dadurch gekennzeichnet, dass** ein Abheben der Gelenkachsen (38, 39) des Drahtbügels (30) im geschwenkten Zustand des Spiegelkopfs (12) durch die Lagerstützen (25, 26) umgreifende Gehäusewände (17, 18) verhindert wird.

19. Außenrückblickspiegel nach einem der Ansprüche 13 bis 18,
**dadurch gekennzeichnet, dass** die vordere und/oder die hintere Lagerstütze (25, 26) aus mehreren einzelnen oder miteinander verbundenen Lagerstützen bestehen.

20. Außenrückblickspiegel, insbesondere nach einem der Ansprüche 1 bis 19,
**dadurch gekennzeichnet, dass** zwischen dem Träger (3) und der Konsole (2) wenigstens ein Sicherungselement (60) angeordnet ist, das als Schwenkbegrenzung des Spiegelkopfes (12) dient.

21. Außenrückblickspiegel nach Anspruch 20,
**dadurch gekennzeichnet, dass** das Sicherungselement (60) ein Bügel ist.

22. Außenrückblickspiegel nach Anspruch 20 oder 21,
**dadurch gekennzeichnet, dass** der Drahtbügel (30) und das Sicherungselement (60) eine gemeinsame Schwenkachse (39) haben.

23. Außenrückblickspiegel nach einem der Ansprüche 20 bis 22,
**dadurch gekennzeichnet, dass** das Sicherungselement (60) U-förmig gebogen ist.

24. Außenrückblickspiegel nach einem der Ansprüche 20 bis 23,
**dadurch gekennzeichnet, dass** das Sicherungselement (60) mit seinem der Konsole (2) zugewandten Ende in wenigstens einer hinteren Lagerstütze (26) schwenkbar gelagert ist.

25. Außenrückblickspiegel nach einem der Ansprüche 20 bis 24,
**dadurch gekennzeichnet, dass** das Sicherungselement (60) mit seinem dem Spiegelkopf (12) zugewandten Ende in einem Langloch (61) geführt ist.

26. Außenrückblickspiegel nach Anspruch 25,
**dadurch gekennzeichnet, dass** das Langloch (61) Teil des Trägers (3) ist und sich vollständig im Aufnahmeraum (31) befindet.

27. Außenrückblickspiegel nach Anspruch 25 oder 26,
**dadurch gekennzeichnet, dass** das Langloch (61) in normaler Betriebsstellung des Spiegelkopfes (12) im Wesentlichen parallel zum Boden (29) des Aufnahmeraumes (31) verläuft.

28. Außenrückblickspiegel nach einem der Ansprüche 20 bis 27,
**dadurch gekennzeichnet, dass** in normaler Betriebsstellung des Spiegelkopfes (12) das Sicherungselement (60) parallel zum Drahtbügel (30), zum Langloch (61) und zum Aufnahmeraum (31) angeordnet ausgerichtet ist.

29. Außenrückblickspiegel nach einem der Ansprüche 25 bis 28,
**dadurch gekennzeichnet, dass** bei entgegen der Fahrtrichtung (10) geschwenktem Spiegelkopf (12) das Sicherungselement (60) gleichzeitig und parallel mit dem Aufnahmeraum (31) und dessen Boden (29) schwenkt.

30. Außenrückblickspiegel nach einem der Ansprüche 25 bis 29,
**dadurch gekennzeichnet, dass** das Sicherungselement (60) bei in Fahrtrichtung (10) nach vorn geschwenktem Spiegelkopf (12) mit seinem dem Spiegelkopf (12) zugewandten Ende bis zum hinteren Ende (62) des Langlochs (61) gleitet.

31. Außenrückblickspiegel nach einem der Ansprüche 25 bis 30,
**dadurch gekennzeichnet, dass** bei in Fahrtrichtung (10) nach vorn geschwenktem Spiegelkopf (12) der Winkel zwischen dem Sicherungselement (60) und dem Langloch (61) größer 90° ist.

32. Außenrückblickspiegel nach einem der Ansprüche 25 bis 31,
**dadurch gekennzeichnet, dass** bei in Fahrtrichtung (10) nach vorn geschwenktem Spiegelkopf (12) das Sicherungselement (60) bei Kontakt mit dem hinteren Ende (62) des Langlochs (61) eine Zugbelastung erfährt.

33. Außenrückblickspiegel nach einem der Ansprüche 1 bis 32,
**dadurch gekennzeichnet, dass** der Drahtbügel (30) und/oder das Sicherungselement (60) aus einem Metall, insbesondere aus einem korrosionsstabilen Metall, gefertigt sind.

## Claims

1. Outside rear view mirror for vehicles, preferably for motor vehicles, comprising a mirror foot (11) and a mirror head (12), which can be pivoted into or against the direction of travel (10) relative to the mirror foot (11) and has a support (3) situated in a housing (1), said support being connected to a bracket (2) of the mirror foot (11) via an intermediate articulation having two parallel hinge axles (38, 39),
**characterised in that** the intermediate articulation has a wire clip (30), which is provided with at least one U-shaped shoulder (37), wire portions (32, 33) of said wire clip forming the hinge axles (38, 39).

2. Outside rear view mirror according to claim 1,
**characterised in that** the wire portions (32, 33) are straight.

3. Outside rear view mirror according to either claim 1 or claim 2,
**characterised in that** the wire portions (32, 33) form the end portions of the wire clip (30).

4. Outside rear view mirror according to any one of claims 1 to 3,
**characterised in that** the wire portions (32, 33) are connected to each other via a connecting web (36).

5. Outside rear view mirror according to claim 4,
**characterised in that** the shape of the connecting web (36) Is adapted to the inner contours of the mirror head (12) and of the mirror foot (11).

6. Outside rear view mirror according to any one of claims 1 to 5,
**characterised in that** the U-shaped shoulder (37) is part of one of the wire portions (32,33).

7. Outside rear view mirror according to any one of claims 1 to 6,
**characterised in that** the limbs (41) of the U-shaped shoulder (37) are oriented orthogonal to a hinge axle (38, 39).

8. Outside rear view mirror according to any one of claims 1 to 7,
**characterised in that** a further connecting web (42) of the U-shaped shoulder (37) interconnects the two limbs (41) and extends parallel to the hinge axle (38, 39).

9. Outside rear view mirror according to any one of claims 1 to 8,
**characterised in that** the further connecting web (42) of the U-shaped shoulder (37) is a sliding member and/or a stop for a parking lock (45).

10. Outside rear view mirror according to any one of claims 1 to 9,
**characterised in that** the further connecting web (42) of the U-shaped shoulder (37) is coated with a friction-reducing coating.

11. Outside rear view mirror according to any one of claims 1 to 10,
**characterised in that** when the mirror head (12) is in the parking position folded back against the direction of travel (10) the further connecting web (42) of the U-shaped shoulder (37) is clamped between a supporting bracket (55) for the wire clip (30) and a preferably curved sliding surface (49) of the parking lock (45).

12. Outside rear view mirror according to any one of claims 1 to 11,
**characterised in that** in the normal operating position of the mirror head (12) and when the mirror head (12) is pivoted against the direction of travel (10) the wire clip (30) lies within a mounting space (31) provided in the mirror head (12) on the side facing the mirror foot (11).

13. Outside rear view mirror according to any one of claims 1 to 12,
**characterised in that** when the mirror head (12) is pivoted in the direction of travel (10) the hinge axles (38,39) and the hinge mounts (27, 28) of the wire clip (30) engage with the bearing supports (25, 26) of the mirror foot (11).

14. Outside rear view mirror according to any one of claims 1 to 13,
**characterised in that** in the normal operating position when the mirror head (12) is pivoted in the direction of travel (10) the wire clip (30) is substantially parallel to the bracket (2) of the mirror foot (11).

15. Outside rear view mirror according to any one of claims 9 to 14,
**characterised in that** when the mirror head (12) is pivoted against the direction of travel (10) the retention force acting on the mirror head (12) is transferred between the parking lock (45) and the supporting bracket (55) for the wire clip (30) exclusively via the transverse connecting web (42).

16. Outside rear view mirror according to any one of claims 13 to 15,
**characterised in that** in the normal operating position of the mirror head (12) the bearing supports (25, 26) extend fully into the mounting space (31).

17. Outside rear view mirror according to any one of claims 13 to 16,
**characterised in that** the hinge axles (38, 39) of the wire clip (30) each engage into the bearing supports (25, 26) via a plug-in portion (8).

18. Outside rear view mirror according to any one of claims 13 to 17,
**characterised in that** when the mirror head (12) is pivoted removal of the hinge axles (38, 39) of the wire clip (30) is prevented by the housing walls (17, 18) enclosing the bearing supports (25, 26).

19. Outside rear view mirror according to any one of claims 13 to 18,
**characterised in that** the front and/or rear bearing supports (25, 26) consist of a plurality of individual or interconnected bearing supports.

20. Outside rear view mirror, in particular according to any one of claims 1 to 19, **characterised in that** at least one securing member (60) is arranged between the support (3) and the bracket (2) and limits pivoting of the mirror head (12).

21. Outside rear view mirror according to claim 20,
**characterised in that** the securing member (60) is a clip.

22. Outside rear view mirror according to either claim 20 or claim 21,
**characterised in that** the wire clip (30) and the securing member (60) have a common pivot axle (39).

23. Outside rear view mirror according to any one of claims 20 to 22,
**characterised in that** the securing member (60) is bent so as to be U-shaped.

24. Outside rear view mirror according to any one of claims 20 to 23,
**characterised in that** the securing member (60) is pivotably mounted in at least one rear bearing support (26) via its end facing the bracket (2).

25. Outside rear view mirror according to any one of claims 20 to 24,
**characterised in that** the securing member (60) is guided in a slot (61) via its end facing the mirror head (12).

26. Outside rear view mirror according to claim 25,
**characterised in that** the slot (61) is part of the support (3) and is situated completely in the mounting space (31).

27. Outside rear view mirror according to either claim 25 or claim 26.
**characterised in that** in the normal operating position of the mirror head (12) the slot (61) extends substantially parallel to the base (29) of the mounting space (31).

28. Outside rear view mirror according to any one of claims 20 to 27, **characterised in that** in the normal operating position of the mirror head (12) the securing member (60) is aligned parallel to the wire clip (30), the slot (61) and the mounting space (31).

29. Outside rear view mirror according to any one of claims 25 to 28, **characterised in that** when the mirror head (12) is pivoted against the direction of travel (10) the securing member (60) simultaneously pivots parallel to mounting space (31) and its base (29).

30. Outside rear view mirror according to any one of claims 25 to 29, **characterised in that** when the mirror head (12) is pivoted forward in the direction of travel (10) the securing member (60) slides via its end facing the mirror head (12) up to the rear end (62) of the slot (61).

31. Outside rear view mirror according to any one of claims 25 to 30, **characterised in that** when the mirror head (12) is pivoted forward in the direction of travel (10) the angle between the securing member (60) and the slot (61) is greater than 90°.

32. Outside rear view mirror according to any one of claims 25 to 31, **characterised in that** when the mirror head (12) is pivoted forward in the direction of travel (10) the securing member (60) is subject to tensile loading upon contact with the rear end (62) of the slot (61).

33. Outside rear view mirror according to any one of claims 1 to 32, **characterised in that** the wire clip (30) and/or the securing member (60) are made of a metal, in particular a corrosion-stable metal.

## Revendications

1. Rétroviseur extérieur pour véhicules, de préférence pour véhicules automobiles, comprenant un pied de miroir (11) et une tête de miroir (12) qui peut pivoter par rapport au pied de miroir (11) dans ou à l'encontre de la direction de conduite (10) et présente un longeron (3) se trouvant dans un logement (1), longeron qui est relié à une console (2) du pied de miroir (11) par le biais d'une articulation intermédiaire qui présente deux axes d'articulation (38, 39) parallèles l'un à l'autre,
**caractérisé en ce que** l'articulation intermédiaire présente un arceau de fil métallique (30) qui est pourvu d'au moins un épaulement (37) en forme de U et duquel des sections de fil métallique (32, 33) forment les axes d'articulation (38, 39).

2. Rétroviseur extérieur selon la revendication 1,
**caractérisé en ce que** les sections de fil métallique (32, 33) sont réalisées de manière droite.

3. Rétroviseur extérieur selon la revendication 1 ou 2,
**caractérisé en ce que** les sections de fil métallique (32, 33) forment les sections d'extrémité de l'arceau de fil métallique (30).

4. Rétroviseur extérieur selon l'une quelconque des revendications 1 à 3, **caractérisé en ce que** les sections de fil métallique (32, 33) sont reliées entre elles par le biais d'une traverse (36).

5. Rétroviseur extérieur selon la revendication 4.
**caractérisé en ce que** la traverse (36) est adaptée dans sa forme aux contours internes de la tête de miroir (12) et du pied de miroir (11).

6. Rétroviseur extérieur selon l'une quelconque des revendications 1 à 5, **caractérisé en ce que** l'épaulement (37) en forme de U fait partie d'une des sections de fil métallique (32, 33).

7. Rétroviseur extérieur selon l'une quelconque des revendications 1 à 6, **caractérisé en ce que** les branches (41) de l'épaulement (37) en forme de U sont orientées de manière orthogonale à un axe d'articulation (38, 39).

8. Rétroviseur extérieur selon l'une quelconque des revendications 1 à 7, **caractérisé en ce qu'**une autre traverse (42) de l'épaulement (37) en forme de U qui relie les deux branches (41) ensemble, s'étend parallèlement à l'axe d'articulation (38, 39).

9. Rétroviseur extérieur selon l'une quelconque des revendications 1 à 8, **caractérisé en ce que** l'autre traverse (42) de l'épaulement (37) en forme de U est un corps coulissant et/ou une butée pour un cran de stationnement (45).

10. Rétroviseur extérieur selon l'une quelconque des revendications 1 à 9, **caractérisé en ce que** l'autre traverse (42) de l'épaulement (37) en forme de U est recouverte d'un revêtement réduisant la friction.

11. Rétroviseur extérieur selon l'une quelconque des revendications 1 à 10, **caractérisé en ce que** l'autre traverse (42) de l'épaulement (37) en forme de U se trouve, avec la tête de miroir (12) se trouvant en position de stationnement, rabattue à l'encontre de la direction de conduite (10), en position coincée entre un support (55) pour l'arceau de fil métallique (30) et une surface coulissante (49) de préférence courbée du cran de stationnement (45).

12. Rétroviseur extérieur selon l'une quelconque des revendications 1 à 11, **caractérisé en ce que** l'arceau de fil métallique (30) se situe, en position de fonctionnement normale de la tête de miroir (12) et avec la tête de miroir (12) pivotée à l'encontre de la direction de conduite (10), au sein d'un espace de réception (31) qui est prévu dans la tête de miroir (12) sur le côté tourné vers le pied de miroir (11).

13. Rétroviseur extérieur selon l'une quelconque des revendications 1 à 12, **caractérisé en ce que** l'arceau de fil métallique (30) se trouve, avec la tête de miroir (12) pivotée dans la direction de conduite (10), avec les axes d'articulation (38, 39) et les logements d'articulation (27, 28) enclenchés avec des appuis (25, 26) du pied de miroir (11).

14. Rétroviseur extérieur selon l'une quelconque des revendications 1 à 13, **caractérisé en ce que** l'arceau de fil métallique (30) est positionné, en position de fonctionnement normale et avec la tête de miroir (12) pivotée dans la direction de conduite (10), essentiellement parallèlement à la console (2) du pied de miroir (11).

15. Rétroviseur extérieur selon l'une quelconque des revendications 9 à 14, **caractérisé en ce que** la force de retenue agissant sur la tête de miroir (12) entre le cran de stationnement (45) et le support (55) pour l'arceau de fil métallique (30) est transmise exclusivement par le biais de la traverse (42), avec la tête de miroir (12) pivotée à l'encontre de la direction de conduite (10).

16. Rétroviseur extérieur selon l'une quelconque des revendications 13 à 15, **caractérisé en ce que** les appuis (25, 26) font entièrement saillie dans l'espace de réception (31) en position de fonctionnement normale de la tête de miroir (12).

17. Rétroviseur extérieur selon l'une quelconque des revendications 13 à 16, **caractérisé en ce que** l'arceau de fil métallique (30) s'enclenche avec ses axes d'articulation (38, 39) dans les appuis (25, 26) par le biais d'une section d'insertion (8) respective,

18. Rétroviseur extérieur selon l'une quelconque des revendications 13 à 17, **caractérisé en ce qu'**un soulèvement des axes d'articulation (38, 39) de l'arceau de fil métallique (30) est empêché à l'état pivoté de la tête de miroir (12) par les parois de logement (17, 18) englobant les appuis (25, 26).

19. Rétroviseur extérieur selon l'une quelconque des revendications 13 à 18, **caractérisé en ce que** l'appui avant et/ou l'appui arrière (25, 26) se composent de plusieurs appuis individuels ou reliés ensemble.

20. Rétroviseur extérieur, notamment selon l'une quelconque des revendications 1 à 19,
**caractérisé en ce qu'**au moins un élément de fixation (60) qui sert de limite de pivotement de la tête de miroir (12), est disposé entre le longeron (3) et la console (2).

21. Rétroviseur extérieur selon la revendication 20,
**caractérisé en ce que** l'élément de fixation (60) est un arceau.

22. Rétroviseur extérieur selon la revendication 20 ou 21,
**caractérisé en ce que** l'arceau de fil métallique (30) et l'élément de fixation (60) ont un axe de pivotement commun (39).

23. Rétroviseur extérieur selon l'une quelconque des revendications 20 à 22, **caractérisé en ce que** l'élément de fixation (60) est courbé en forme de U.

24. Rétroviseur extérieur selon l'une quelconque des revendications 20 à 23, **caractérisé en ce que** l'élément de fixation (60) est logé à pivotement avec son extrémité tournée vers la console (2) dans au moins un appui arrière (26).

25. Rétroviseur extérieur selon l'une quelconque des revendications 20 à 24, **caractérisé en ce que** l'élément de fixation (60) est guidé avec son extrémité tournée vers la tête de miroir (12) dans un trou oblong (61).

26. Rétroviseur extérieur selon la revendication 25,
**caractérisé en ce que** le trou oblong (61) fait partie du longeron (3) et se trouve entièrement dans l'espace de réception (31).

27. Rétroviseur extérieur selon la revendication 25 ou 26,
**caractérisé en ce que** le trou oblong (61) s'étend essentiellement parallèlement au fond (29) de l'espace de réception (31) en position de fonctionnement normale de la tête de miroir (12).

28. Rétroviseur extérieur selon l'une quelconque des revendications 20 à 27, **caractérisé en ce que** l'élément de fixation (60) est orienté parallèlement à l'arceau de fil métallique (30), au trou oblong (61) et à l'espace de réception (31) en position de fonctionnement normale de la tête de miroir (12).

29. Rétroviseur extérieur selon l'une quelconque des revendications 25 à 28, **caractérisé en ce que** l'élément de fixation (60) pivote simultanément et parallèlement à l'espace de réception (31) et son fond (29) avec la tête de miroir (12) pivotée à l'encontre de la direction de conduite (10).

30. Rétroviseur extérieur selon l'une quelconque des revendications 25 à 29, **caractérisé en ce que** l'élément de fixation (60) coulisse avec son extrémité tournée vers la tête de miroir (12) jusqu'à l'extrémité arrière (62) du trou oblong (61) avec la tête de miroir (12) pivotée vers l'avant dans la direction de conduite (10).

31. Rétroviseur extérieur selon l'une quelconque des revendications 25 à 30, **caractérisé en ce que** l'angle entre l'élément de fixation (60) et le trou oblong (61) est supérieur à 90°, avec la tête de miroir (12) pivotée vers l'avant dans la direction de conduite (10).

32. Rétroviseur extérieur selon l'une quelconque des revendications 25 à 31.
**caractérisé en ce que** l'élément de fixation (60) subit une contrainte de traction en cas de contact avec l'extrémité arrière (62) du trou oblong (61), avec la tête de miroir (12) pivotée vers l'avant dans la direction de conduite (10).

33. Rétroviseur extérieur selon l'une quelconque des revendications 1 à 32, **caractérisé en ce que** l'arceau de fil métallique (30) et/ou l'élément de fixation (60) sont fabriqués en un métal, notamment en un métal stable à la corrosion.
